# NEUE EUROPÄISCHE PATENTSCHRIFT

(11) **EP 1 449 472 B2**
(45) Veröffentlichungstag und Bekanntmachung des Hinweises auf die Entscheidung über den Einspruch: **19.01.2011**
(45) Hinweis auf die Patenterteilung: 13.04.2005
(21) Anmeldenummer: 03405099.7
(22) Anmeldetag: 19.02.2003
(51) Int. Cl.: A47J 43/10

(54) **Handantreibbares Gerät zum Zerkleinern von Lebensmitteln**
Hand driven food cutter
Dispositif à actionnement manuel pour couper des produits alimentaires

(43) Veröffentlichungstag der Anmeldung: 25.08.2004
(73) Patentinhaber: Betty Bossi Verlag AG, 8021 Zürich (CH)
(72) Erfinder: Müller, Michel Pierre, 5400 Baden (CH)
(74) Vertreter: Wagner, Wolfgang Heribert

(56) Entgegenhaltungen:
- DE-A1- 3 914 372
- FR-A- 2 532 540
- US-A- 3 784 118
- US-A- 4 209 916
- US-A- 6 035 771
- US-A- 6 035 771
- US-B1- 6 251 040

## Beschreibung

### Technisches Gebiet

Die Erfindung betrifft ein handantreibbares Gerät zum Zerkleinern von Lebensmitteln, insbesondere von Gemüse.

### Stand der Technik

Bei einem als 'der Häxler' vermarkteten gattungsgemässen Gerät der Anmelderin ist das Antriebsteil als mittig im Deckel gelagerte Kurbel ausgebildet. Die Welle weist zwei in entgegengesetzten Richtungen rechtwinklig abstehende Klingen auf, welche jeweils nur an der Vorderkante mit einer Schneide versehen sind, so dass die Kurbel stets im Uhrzeigersinn gedreht werden muss. Beide sind verhältnismässig knapp über dem Boden angeordnet, wenn auch in der Richtung der Welle gegeneinander versetzt. Das Gerät hat sich zwar im allgemeinen bewährt, doch kann es vorkommen, dass festes Schneidgut, z.B. Zwiebeln, wegen der gleichbleibenden Drehrichtung von den Klingen mitgenommen wird. Dem kann nur durch eine verhältnismässig hohe Geschwindigkeit der Klingen einigermassen entgegengewirkt werden, was jedoch besonders beim Zwiebelschneiden leicht dazu führen kann, dass ein befriedigender Grad von Homogenität erst bei hohem Zerkleinerungsgrad eintritt. Das Gerät ist nur bequem zu benützen, wenn es auf einer ebenen Arbeitsfläche abgestützt ist, was einen verhältnismässig grossen Platzbedarf beim Gebrauch nach sich zieht.

Ein weiteres gattungsgemässes Gerät, bei welchem neben einem Schneideinsatz mit rechtwinklig abstehenden Klingen auch verschiedene andere Einsätze verwendet werden können und je nach Art des Einsatzes verschiedene Uebersetzungsverhältnisse zur Anwendung kommen, ist aus US-A-6 035 771 bekannt. FR-A-2 532 540 zeigt ein grundsätzlich ähnlich wie das erstgenannte Gerät aufgebautes Mischgerät zur Herstellung von Sossen.

Aus der DE-A-39 14 372 ist ein elektrisch angetriebener Gemüseschneider von im übrigen ähnlichem Aufbau wie das erstgenannte Gerät bekannt, bei welchem die Welle ebenfalls zwei in entgegengesetzten Richtungen rechtwinklig abstehende Klingen aufweist, die in Richtung der Welle gegeneinander versetzt sind. Zwischen denselben ist ausserdem, damit das auch hier auftretende Mitnehmen des Schneidguts sich nicht ungünstig auswirkt, ein feststehendes oder nur beschränkt drehbares Kontermesser im Gefäss angeordnet. Die Klingen sind an beiden Längskanten mit Schneiden versehen, doch hat dies lediglich den Zweck, eine Anlaufsperre für den Elektromotor entbehrlich zu machen. Eine gezielte Umkehr des Drehsinns der Welle ist nicht vorgesehen.

Schliesslich ist US-A-3 784 118 ein elektrisch angetriebener Mixer zu entnehmen, bei welchem die Neigung von Klingen, welche am Grund eines Gefässes schräg nach oben gerichtet an einem drehbaren Schaft befestigt sind und beidseits Schneiden aufweisen, durch Umkehr der Drehrichtung umgestellt werden kann.

Eine andere Gattung von Geräten zum Zerkleinern von Lebensmitteln, wie sie insbesondere zum Zerkleinern von Zwiebeln eingesetzt werden, ist aus der EP-A-1 232 840 ersichtlich. Dieses Gerät weist ein Messer mit an der Unterseite serpentinenförmig gebogener Schneide auf, das am unteren Ende eines Stössels angebracht ist, der an seinem oberen Ende einen Betätigungskopf trägt. Durch Schläge auf den letzteren wird das Messer gegen die Rückstellkraft einer Spiralfeder wiederholt gegen eine feste Unterlage gestossen, auf welcher das Schneidgut liegt. Diese Geräte sind verhältnismässig unbequem zu bedienen, ausserdem können sich leicht Stücke des Schneidguts im Messer verklemmen, was die weitere Zerkleinerung derselben verhindert.

### Darstellung der Erfindung

Der Erfindung liegt die Aufgabe zu Grunde, ein gattungsgemässes Gerät anzugeben, das auch bei mässigem Zerkleinerungsgrad eine hohe Gleichmässigkeit des Schneidguts gewährleistet, insbesondere beim Schneiden von Zwiebeln. Ausserdem soll es bequem zu bedienen sein.

Diese Aufgabe wird durch die Merkmale im Kennzeichen des Anspruchs 1 erfüllt. Das erfindungsgemässe Gerät kann beim Gebrauch in den Händen gehalten und die Welle, welche die Klingen trägt, durch Hin- und Herbewegen des Antriebsteils relativ zu den übrigen Teilen des Geräts in abwechselnd entgegengesetzte Drehbewegungen versetzt werden. Die räumliche Lage des Geräts kann dabei schwanken, meist wird es um etwa 90° gekippt sein. Jedenfalls wird das Gerät beim Gebrauch gewöhnlich nicht aufgestützt und erfordert daher keinen freien Platz auf einer Arbeitsfläche.

Vor allem aber hat es sich gezeigt, dass das Schneidgut, insbesondere Zwiebeln, sehr rasch und gleichmässig zerkleinert wird. Ein weiterer Vorteil des Gerätes liegt darin, dass es für Rechtshänder und Linkshänder gleich bequem zu bedienen ist.

### Kurze Beschreibung der Zeichnungen

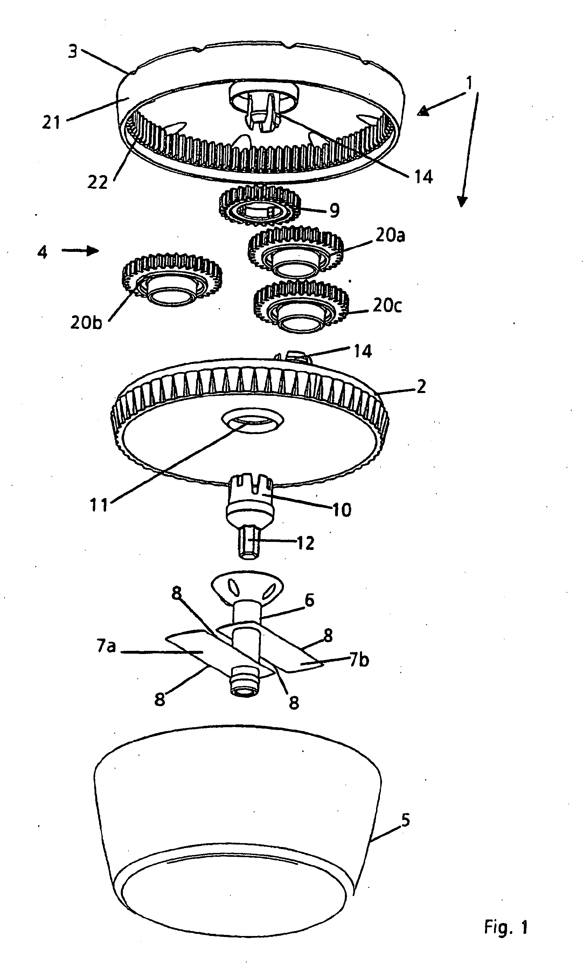

Im folgenden wird die Erfindung anhand von Figuren, welche lediglich ein Ausführungsbeispiel darstellen, näher erläutert. Es zeigen
- Fig. 1: eine Explosionsdarstellung des erfindungsgemässen Geräts,

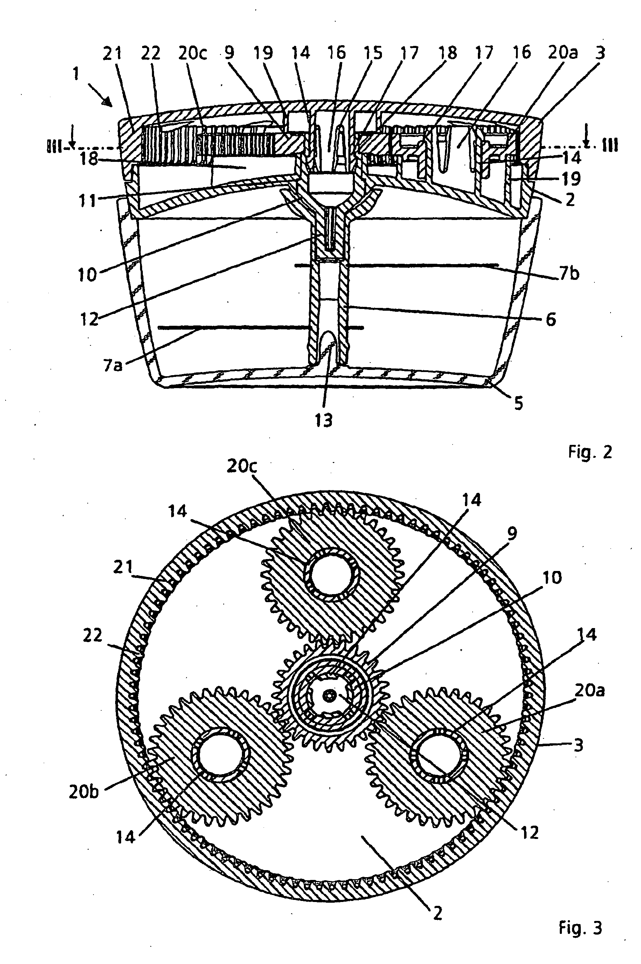

- Fig. 2: einen axialen Längsschnitt durch das erfindungsgemässe Gerät von Fig. 1 und
- Fig. 3: einen Querschnitt längs III-III in Fig. 2.

### Wege zur Ausführung der Erfindung

Das im wesentlichen rotationssymmetrische Gerät weist einen runden Deckel 1 auf, welcher eine Basis 2 und eine Kappe 3 als Antriebsteil umfasst, zwischen denen ein Getriebe 4 angeordnet ist. Die Kappe 3 weist mehrere regelmässig über ihren Rand verteilte Einbuchtungen auf. Ein becher- oder schalenartiges Gefäss 5 aus durchsichtigem Material ist an die Unterseite der Basis 2 ansteckbar, derart, dass eine Verzahnung am Aussenrand der Unterseite der Basis 2 mit einer komplementären Verzahnung innen am oberen Rand des Gefässes 5 eingreift, so dass die beiden Teile unverdrehbar verbunden sind.

In der Achse des Gefässes 5 liegt eine hohle Welle 6, welche durch die Basis 2 hindurch mit dem Getriebe 4 in Wirkverbindung steht, auf welches andererseits die Kappe 3 einwirkt, so dass Drehungen derselben gegenüber der Basis 2 in Drehungen der Welle 6 umgesetzt werden. Diese trägt zwei nach entgegengesetzten Seiten etwa rechtwinklig abstehende, annähernd rechteckige Klingen 7a,b, die senkrecht zur Achse ausgerichtet sind und bis nahe an die Wand des Gefässes 5 reichen. Die Klingen 7a,b sind in Richtung der Achse gegeneinander versetzt, derart, dass der axiale Abstand der unteren Klinge 7a vom Boden etwa dem der oberen Klinge 7b vom Rand des Gefässes 5 entspricht, während der Abstand zwischen den beiden Klingen 7a, 7b etwas grösser ist. Jede der Klingen 7a,b weist jeweils an beiden parallelen Längskanten eine Schneide 8 auf.

Das Getriebe 4 umfasst mehrere in einer Ebene liegende, drehbar im Deckel gelagerte Zahnräder. Ein im Zentrum des Deckels 1 liegendes Mittelrad 9 weist eine mittige Oeffnung auf, in welche eine Hülse 10 unverdrehbar eingreift, welche durch eine mittige Oeffnung 11 in der Basis 2 ins Innere des Gefässes 5 ragt. Dort trägt sie an ihrem unteren Ende einen Zapfen 12 sechseckigen Querschnitts, der in eine entsprechende Ausnehmung am oberen Ende der Welle 6 eingreift, so dass die Hülse 10 und über diese das Mittelrad 9 unverdrehbar mit der Welle 6 verbunden sind. Am unteren Ende ist die Welle 6 am Boden des Gefässes 5 gelagert, indem ein dort angeformter Lagerzapfen 12 in sie hineinragt. An ihrem oberen Ende, wo sie sich schalenartig aufweitet und den unteren Teil der Hülse 10 umgibt, reicht sie bis an die Basis 2, so dass ein Eindringen von Schneidgut zwischen die Hülse 10 und die Welle 6 nicht möglich ist.

Die Hülse 10 ist an einem vom Zentrum der Kappe 3 nach unten ragenden hohlen Achszapfen 14 gelagert, welcher in eine zum Mittelrad 9 konzentrische Oeffnung in der Hülse 10 eingreift. Er läuft in mehrere durch Schlitze 15 getrennte Finger 16 aus, welche an ihren Enden Haken 17 tragen, die hinter ein umlaufendes Sims 18 im Innern der Hülse 10 greifen und so deren axiale Verschieblichkeit nach unten begrenzen. Nach oben ist die letztere zugleich durch einen den Achszapfen 14 mit Abstand umgebenden Anschlagring 19 an der Kappe 3 beschränkt, so dass die Hülse 10 axial nur geringes Spiel hat.

Das Mittelrad 9 ist konzentrisch von drei gleichen Zwischenrädern 20a,b,c umgeben, die an gleichmässig über seinen Umfang verteilten Stellen mit ihm eingreifen. Sie sind ähnlich wie die Hülse 10 an in diesem Fall von der Basis 2 nach oben ragenden, aber sonst entsprechend ausgebildeten, in konzentrische Oeffnungen eingreifenden Achszapfen 14 gelagert und in ihrer axialen Verschieblichkeit wiederum durch Haken 17 und die Achszapfen 14 mit Abstand umgebende Anschlagringe 19 beschränkt, so dass sie ebenfalls axial nur geringes Spiel haben.

Die Kappe 3 trägt an der Innenseite einer längs ihres Randes umlaufenden, nach unten abstehenden Schürze 21 einen Zahnkranz 22, der von aussen mit den Zwischenrädern 20a,b,c eingreift. Eine Drehung der Kappe 3 gegenüber der Basis 2 bewirkt daher über den Zahnkranz 22 gleiche Drehbewegungen der Zwischenräder 20a,b,c, welche ihrerseits das Mittelrad 9 in eine Drehung versetzen, die sich über die Hülse 10 auf die Welle 6 überträgt. Das Uebersetzungsverhältnis liegt dabei vorzugsweise zwischen 1:3 und 1:5. Beim vorliegend dargestellten Gerät beträgt es 1:4.

Die Klingen 7a,b sind aus rostbeständigem Bandedelstahl gefertigt, ihre Oberfläche ist elektrolytisch poliert und die Schneiden 8 sind gratfrei abgezogen. Alle übrigen Teile des Geräts bestehen aus Kunststoff, vorzugsweise die Kappe 3 aus ABS, das Gefäss 5 aus SAN und die übrigen Teile aus POM. Sie sind im Spritzgussverfahren hergestellt.

Die Abmessungen des Geräts entsprechen seiner Bestimmung als Handgerät. Der Durchmesser beträgt ca. 108mm, die Höhe ca. 75mm. Die Länge der Klingen 7a,b beträgt 52mm. Natürlich sind Abweichungen von diesen Werten möglich. Durchmesser zwischen 80mm und 120mm und Höhen zwischen 60mm und 120mm sind ohne weiteres möglich, ohne dass die Handhabbarkeit und Bedienbarkeit des Geräts sich wesentlich verschlechtern würden. Bei grösserer Höhe des Gefässes müssen unter Umständen mehr als zwei axial gegeneinander versetzte Klingen vorgesehen werden.

Das Schneidgut - z.B. eine vorher in Viertel geschnittene Zwiebel - wird in das Gefäss 5 gefüllt und dann der Deckel 1 aufgesetzt. Anschliessend fasst man z.B. mit der linken Hand das Gefäss 5 und mit der rechten Hand die Kappe 3, wobei deren Einbuchtungen ihre Griffigkeit verbessern und kippt das Gerät um ca. 90°, so dass seine Achse ungefähr waagrecht ist. Anschliessend werden das Gefäss 5 und die mit ihm unverdrehbar verbundene Basis 2 des Deckels 1 einerseits und die Kappe 3 andererseits z.B. 10 Mal in abwechselnd entgegengesetztem Drehsinn gegeneinander verdreht, jedesmal um ca. eine volle Umdrehung. Nach etwa 20 bis 30 Sekunden oder 40 bis 60 Umdrehungen, was 160 bis 240 Umdrehungen der Welle 6 gegenüber dem Gefäss 5 entspricht, ist die Zwiebel zerkleinert. Das Gefäss 5 kann dann abgenommen und geleert werden.

Wegen der regelmässigen Umkehr der Drehrichtung tritt eine Mitnahme des Schneidguts durch die Klingen praktisch nicht auf. Die beim Gebrauch des Geräts im allgemeinen gekippte Lage desselben führt zu einer besseren Verteilung des Schneidguts im Gefäss 5 und zu einer gleichmässigeren Bearbeitung desselben durch die Klingen 7a,b.

### Bezugszeichenliste

- 1: Deckel
- 2: Basis
- 3: Kappe
- 4: Getriebe
- 5: Gefäss
- 6: Welle
- 7a,b: Klingen
- 8: Schneiden
- 9: Mittelrad
- 10: Hülse
- 11: Oeffnung
- 12: Zapfen
- 13: Lagerzapfen
- 14: Achszapfen
- 15: Schlitz
- 16: Finger
- 17: Haken
- 18: Sims
- 19: Anschlagring
- 20a,b,c: Zwischenräder
- 21: Schürze
- 22: Zahnkranz

## Patentansprüche

1. Handantreibbares Gerät zum Zerkleinern von Lebensmitteln, mit einem im wesentlichen rotationssymmetrischen Gefäss (5) zur Aufnahme von Schneidgut, einem unverdrehbar auf das Gefäss (5) aufgesetzten, ebenfalls im wesentlichen rotationssymmetrischen abnehmbaren Deckel (1), einer mittig in der Achse des Gefässes (5) drehbar gelagerten Welle (6), an der mindestens eine ungefähr rechtwinklig abstehende, an einer ersten Längskante mit einer Schneide (8) versehene Klinge (7a; 7b) angebracht ist, einem drehbaren Antriebsteil zum Antrieb der Welle (6) und einem im Deckel (1) angeordneten Getriebe (4), über welches das Antriebsteil und die Welle (6) derart in Wirkverbindung stehen, dass das Uebersetzungsverhältnis grösser als 1 ist, **dadurch gekennzeichnet, dass** die mindestens eine Klinge (7a, 7b) auch an einer der ersten Längskante entgegengesetzten zweiten Längskante eine Schneide (8) aufweist und das Antriebsteil als eine Kappe (3) ausgebildet ist, welche eine mit dem Gefäss (5) verbundene Basis (2) des Deckels (1) bedeckt und derselben gegenüber um eine zur Welle (6) parallele Achse drehbar ist.

2. Gerät nach Anspruch 1, **dadurch gekennzeichnet, dass** das Uebersetzungsverhältnis des Getriebes (4) zwischen 3:1 und 5:1 liegt.

3. Gerät nach Anspruch 1 oder 2, **dadurch gekennzeichnet, dass** das Getriebe (4) mehrere in einer Ebene liegende, miteinander wirkverbundene, jeweils drehbar im Deckel (1) gelagerte Zahnräder umfasst, nämlich ein Mittelrad (9), welches konzentrisch und unverdrehbar mit der Welle (6) verbunden ist und mindestens ein Zwischenrad (20a, 20b, 20c), welches mit dem Mittelrad (9) eingreift, während das Antriebsteil einen mit dem Mittelrad (9) konzentrischen Zahnkranz (22) aufweist, welcher mit dem mindestens einen Zwischenrad (20a, 20b, 20c) eingreift.

4. Gerät nach Anspruch 3, **dadurch gekennzeichnet, dass** er mehrere, vorzugsweise drei das Mittelrad (9) konzentrisch umgebende gleiche Zwischenräder (20a, 20b, 20c) aufweist.

5. Gerät nach Anspruch 3 oder 4, **dadurch gekennzeichnet, dass** die Zahnräder jeweils an durch axiale Schlitze (15) in mehrere Finger (16) geteilten hohlen Achszapfen (14) des Deckels (1) gelagert sind, welche in zu den Zahnrädern konzentrische Oeffnungen eingreifen.

6. Gerät nach Anspruch 5, **dadurch gekennzeichnet, dass** die axiale Verschiebbarkeit der Zahnräder jeweils einseitig durch abstehende Haken (17) an den Enden der Finger (16) beschränkt ist.

7. Gerät nach einem der Ansprüche 3 bis 6, **dadurch gekennzeichnet, dass** die Welle (6) abnehmbar und unverdrehbar mit einem Zapfen (12) eingreift, welcher durch eine mittige Oeffnung (11) an der dem Gefäss (5) zugewandten Seite des Deckels (1) hindurch mit dem Mittelrad (9) verbunden ist.

8. Gerät nach einem der Ansprüche 1 bis 7, **dadurch gekennzeichnet, dass** die Welle (6) am Grund des Gefässes (5) gelagert ist.

9. Gerät nach einem der Ansprüche 1 bis 8, **dadurch gekennzeichnet, dass** an der Welle (6) zwei Klingen (7a, 7b) an entgegengesetzten Seiten und in Längsrichtung gegeneinander versetzt angebracht sind.

10. Gerät nach Ansprüch 9, **dadurch gekennzeichnet, dass** die eine Klinge (7b) annähernd gleich weit vom oberen Rand des Gefässes (5) entfernt ist wie die andere Klinge (7a) vom Boden desselben.

11. Gerät nach einem der Ansprüche 1 bis 10, **dadurch gekennzeichnet, dass** der Deckel (1) eine Verzahnung aufweist, welche mit einer komplementären Verzahnung am Rand des Gefässes (5) eingreift.

12. Gerät nach einem der Ansprüche 1 bis 11, **dadurch gekennzeichnet, dass** die Kappe (3) am Rand mehrere über den Umfang verteilte Einbuchtungen zur Verbesserung der Griffigkeit aufweist.

13. Gerät nach einem der Ansprüche 1 bis 12, **dadurch gekennzeichnet, dass** das Gefäss (5) aus durchsichtigem Material besteht.

14. Gerät nach einem der Ansprüche 1 bis 13, **dadurch gekennzeichnet, dass** es mit Ausnahme der Klingen (7a, 7b) aus Kunststoff besteht.

15. Gerät nach einem der Ansprüche 1 bis 14, **dadurch gekennzeichnet, dass** sein Durchmesser zwischen 80mm und 120mm beträgt.

16. Gerät nach einem der Ansprüche 1 bis 15, **dadurch gekennzeichnet, dass** seine Höhe zwischen 60mm und 120mm beträgt.

## Claims

1. Manually drivable apparatus for comminuting foods, comprising a substantially rotationally symmetrical vessel (5) for receiving material to be cut, a likewise substantially rotationally symmetrical removable cover (1) nonrotatably mounted on the vessel (5), a shaft (6) which is rotatably mounted centrally along the axis of the vessel (5) and on which at least one blade (7a, 7b) projecting approximately at right angles and provided on a first longitudinal edge with a cutting edge (8) is mounted, a rotatable drive part for driving the shaft (6) and a gear (4) which is arranged in the cover (1) and via which the drive part and the shaft (6) have an operative connection in such a way that the transmission ratio is greater than 1, **characterized in that** the at least one blade (7a, 7b) also has a cutting edge (8) on a second longitudinal edge opposite the first longitudinal edge and the drive part is in the form of a cap (3) which covers a base (2) of the cover (1) connected to the vessel (5) and is rotatable relative to said base about an axis parallel to the shaft (6).

2. Apparatus according to Claim 1, **characterized in that** the transmission ratio of the gear (4) is from 3:1 to 5:1.

3. Apparatus according to Claim 1 or 2, **characterized in that** the gear (4) comprises a plurality of gear wheels lying in a plane, having an operative connection to one another and in each case rotatably mounted in the cover (1), namely a central wheel (9), which is connected concentrically and nonrotatably to the shaft (6), and at least one intermediate wheel (20a, 20b, 20c) which engages the central wheel (9), while the drive part has a gear ring (22) which is concentric with the central wheel (9) and engages the at least one intermediate wheel (20a, 20b, 20c).

4. Apparatus according to Claim 3, **characterized in that** it has a plurality of identical intermediate wheels (20a, 20b, 20c), preferably three thereof, which concentrically surround the central wheel (9).

5. Apparatus according to Claim 3 or 4, **characterized in that** the gear wheels are each mounted on hollow axle journals (14) of the cover (1) which are divided into a plurality of fingers (16) by axial slots (15) and engage orifices concentric with the gear wheels.

6. Apparatus according to Claim 5, **characterized in that** the axial displaceability of the gear wheels is limited in each case on one side by projecting hooks (17) at the ends of the fingers (16).

7. Apparatus according to any of Claims 3 to 6, **characterized in that** the shaft (6) is removable and nonrotatably engages a peg (12) which is connected to the central wheel (9) through a central orifice (11) on that side of the cover (1) which faces the vessel (5).

8. Apparatus according to any of Claims 1 to 7, **characterized in that** the shaft (6) engages with the bottom of the vessel (5).

9. Apparatus according to any of Claims 1 to 8, **characterized in that** two blades (7a, 7b) are mounted, on opposite sides and staggered relative to one another in the longitudinal direction, on the shaft (6).

10. Apparatus according to Claim 9, **characterized in that** one blade (7b) is approximately the same distance away from the upper edge of the vessel (5) as the other blade (7a) is from the base thereof.

11. Apparatus according to any of Claims 1 to 10, **characterized in that** the cover (1) has a tooth system which engages a complementary tooth system on the edgvessel (5).

12. Apparatus according to any of Claims 1 to 11, **characterized in that** the cap (3) has, on the edge, a plurality of indentations distributed over the circumference for improving the grip.

13. Apparatus according to any of Claims 1 to 12, **characterized in that** the vessel (5) consists of transparent material.

14. Apparatus according to any of Claims 1 to 13, **characterized in that** it consists of plastic, with the exception of the blades (7a, 7b).

15. Apparatus according to any of Claims 1 to 14, **characterized in that** its diameter is from 80 mm to 120 mm.

16. Apparatus according to any of Claims 1 to 15, **characterized in that** its height is from 60 mm to 120 mm.

## Revendications

1. Dispositif à actionnement manuel pour couper des produits alimentaires, avec un récipient (5) essentiellement à symétrie de révolution, qui est destiné à recevoir des aliments à couper, un couvercle (1) amovible, également essentiellement à symétrie de révolution, qui est posé sur le récipient (5) de façon non orientable, un arbre (6) monté au centre, tournant dans l'axe du récipient (5) et équipé au moins d'une lame (7a, 7b) qui part à peu près à angle droit et est munie d'un tranchant (8) sur une première arête longitudinale, une pièce d'entraînement rotative pour l'entraînement de l'arbre (6), et un engrenage (4) disposé dans le couvercle (1) et mettant en liaison active la pièce d'entraînement et l'arbre (6) de telle manière que le rapport de démultiplication est supérieur à 1, **caractérisé en ce que** ladite au moins une lame (7a, 7b) présente un tranchant (8) aussi sur une deuxième arête longitudinale opposée à la première arête longitudinale et la pièce d'entraînement est conçue comme un capuchon (3), lequel recouvre une base (2) du couvercle (1) reliée au récipient (5) et est tournant par rapport à ladite base sur un axe parallèle à l'arbre (6).

2. Dispositif selon la revendication 1, **caractérisé en ce que** le rapport de démultiplication de l'engrenage (4) est compris entre 3:1 et 5:1.

3. Dispositif selon la revendication 1 ou 2, **caractérisé en ce que** l'engrenage (4) comprend plusieurs roues dentées qui sont situées dans un seul plan, sont reliées entre elles de façon active et sont respectivement rotatives dans le couvercle (1), à savoir une roue centrale (9), qui est reliée à l'arbre (6) concentriquement et de façon non orientable, et au moins une roue intermédiaire (20a, 20b, 20c), laquelle s'engrène avec la roue centrale (9), tandis que la pièce d'entraînement présente une couronne dentée (22) concentrique à la roue centrale (9) et s'engrenant avec ladite au moins une roue intermédiaire (20a, 20b, 20c).

4. Dispositif selon la revendication 3, **caractérisé en ce qu'**il présente plusieurs, de préférence trois, roues intermédiaires identiques (20a, 20b, 20c) entourant concentriquement la roue centrale (9).

5. Dispositif selon la revendication 3 ou 4, **caractérisé en ce que** les roues dentées sont montées respectivement sur des tourillons d'axe (14) creux façonnés sur le couvercle (1) et divisés en plusieurs doigts (16) par des fentes axiales (15), lesdits tourillons d'axe s'engrenant dans des orifices concentriques aux roues dentées.

6. Dispositif selon la revendication 5, **caractérisé en ce que** la mobilité axiale des roues dentées est respectivement limitée d'un côté par des ergots saillants (17) situés aux extrémités des doigts (16).

7. Dispositif selon l'une des revendications 3 à 6, **caractérisé en ce que** l'arbre (6) s'engrène avec un tourillon (12) de façon amovible et non orientable, ledit tourillon étant relié à la roue centrale (9) en traversant un orifice central (11) pratiqué sur la face du couvercle (1) orientée vers le récipient (5).

8. Dispositif selon l'une des revendications 1 à 7, **caractérisé en ce que** l'arbre (6) est monté au fond du récipient (5).

9. Dispositif selon l'une des revendications 1 à 8, **caractérisé en ce que** l'arbre (6) est équipé de deux lames (7a, 7b) montées sur des faces opposées et décalées l'une par rapport à l'autre dans le sens longitudinal.

10. Dispositif selon la revendication 9, **caractérisé en ce que** l'une des lames (7b) est éloignée du bord supérieur du récipient (5) à peu près de la même distance que celle qui sépare du fond dudit récipient l'autre lame (7a).

11. Dispositif selon l'une des revendications 1 à 10, **caractérisé en ce que** le couvercle (1) présente une denture, laquelle s'engrène avec une denture complémentaire façonnée sur le bord du récipient (5).

12. Dispositif selon l'une des revendications 2 à 11, **caractérisé en ce que** le capuchon (3) présente sur le bord plusieurs entailles réparties sur la circonférence, destinées à améliorer la préhensibilité.

13. Dispositif selon l'une des revendications 1 à 12, **caractérisé en ce que** le récipient (5) est composé de matière transparente.

14. Dispositif selon l'une des revendications 1 à 13, **caractérisé en ce qu'**il est composé de matière plastique, à l'exception des lames (7a, 7b).

15. Dispositif selon l'une des revendications 1 à 14, **caractérisé en ce que** son diamètre va de 80 mm à 120 mm.

16. Dispositif selon l'une des revendications 1 à 15, **caractérisé en ce que** sa hauteur va de 60 mm à 120 mm.
